# EUROPEAN PATENT SPECIFICATION

(11) **EP 3 013 697 B1**
(45) Date of publication and mention of the grant of the patent: **23.08.2017**
(21) Application number: 14734028.5
(22) Date of filing: 16.06.2014
(51) Int. Cl.: B65B 43/60, B65G 17/12, B65G 15/10

(54) **SYSTEM AND METHOD FOR TRANSPORTING PACKAGING CONTAINERS**
SYSTEM UND VERFAHREN ZUM FÖRDERN VON VERPACKUNGSBEHÄLTERN
SYSTÈME ET PROCÉDÉ POUR TRANSPORTER DES RÉCIPIENTS D' EMBALLAGE

(30) Priority: 25.06.2013 SE 1350772
(43) Date of publication of application: 04.05.2016
(73) Proprietor: Tetra Laval Holdings & Finance S.A., 1009 Pully (CH)
(72) Inventor: ZETTERSTRÖM, Håkan, S-241 31 Eslöv (SE)
(74) Representative: Tetra Pak - Patent Attorneys SE
(86) International application number: PCT/EP2014/062536
(87) International publication number: WO 2014/206784

(56) References cited:
- EP-A1- 2 522 584
- WO-A1-2011/009805
- DE-A1-102006 062 530
- US-A1- 2005 284 103
- US-B2- 6 688 451

## Description

### Technical Field

There present invention relates to a transportation system, and in particular to a transportation system according to the preamble of claim 1, suitable for use in machines packaging liquids or semi-liquids, and to a method for arranging a transportation system according to the preamble of claim 16.

### Technical Background

Within the field of packaging of liquids into packaging containers, in particular liquid and semi-liquid food products into packaging containers it is common practice to use one of two techniques. The first one is to use a conveyor system in which the packaging container is placed in a slot of a conveyor and is intermittently moved forward. In each stop position an action can take place, such as sterilization of the packaging container, filling of the packaging container, sealing of the packaging container, folding of the packaging container, etc. This technique is commonly used when filling beverage into packages made of a paper laminate, such as the Tetra Rex container and the Tetra Top container by the present applicant. The second technique involves grabbing a packaging container by its neck ring, in the case of a PET-bottle, and enabling it to follow a continuous motion through a filling machine, where the forwarding of the packaging container is ensured by star wheels and handovers between such star wheels during critical portions of the filling process. Within the present context the process of packaging liquids or semi-liquids generally involves the actual step of filling a product into the packaging container as well as closing the packaging container to the atmosphere, since this is a crucial part of the filling process. Further, sterilization of the packaging container may also form part of the filling process since that is also a key part of ensuring a reliable end product. The area of packaging food products will also include final folding and other operations generally being performed in a packaging machine.

### Summary of the Invention

The present invention, and the embodiments thereof, aims at providing a transportation system enabling reliable transport of packaging container through an entire filling process. The system is cost efficient and reliable and ensure delicate positioning of the packaging containers. Further, the system is particularly adapted for continuous filling process, where the packaging container is moving continuously through a filling machine and through each of the processing steps performed.

For the achievement of some or all of the effects stated above the present invention provides a transportation system according to claim 1, for transporting packaging containers through a series of processing steps, comprising an endless conveyor following a path including guide elements and at least one drive element, wherein base elements are distributed along the length of the endless conveyor and releasably arranged in positions that are continuously adjustable along the length of the conveyor.

The feature that the base elements are continuously adjustable along the length of the conveyor is an enabler for an important aspect of the present invention, since it enables for the base elements to be positioned freely around the length of the endless conveyor. There are embodiments where a specific base element is used to close a loop forming the endless conveyor, and this particular base element will not have a continuously adjustable position as such, rather it will be fixed to the location of the junction. Still, for all practical purposes the position of this single fixed element may be considered as continuously adjustable within the purposes of the present invention since it will not pose any practical limitation in regard of how the remaining base elements may be positioned. It may be important to know that in operation the base elements are fixedly or rigidly arranged in relation to the endless conveyor, which is needed since the tolerances are very small.

The inventive device (and method) allows for the endless conveyor to be arranged along its path, be tensioned to the tension expected during use (while in its use-position), after which the base elements are arranged in the correct position down to fractions of a millimetre. This may be ever so important when the operational conditions include temperatures of 60-80 °C or even more.

According to the invention the drive element comprises recesses for receiving the base elements, and wherein the base elements are designed to engage the recesses for transfer of a propelling force from the drive element to the transportation system via the base elements.

In several preferred embodiments the position of the base elements is matched to the recesses, i.e. the base elements are actively positioned such that their position will match with the recesses in particular in terms of pitch (distance between adjacent base elements/recesses). Details are presented in relation to embodiments of the inventive method. This will enable positional tolerances as low as the tolerances available for the tool machining the recesses in guide elements or drive elements, meaning fractions of mm:s, both for the pitch, i.e. the distance between adjacent base elements, as well as for the absolute position of a base element. In particular embodiment the tolerances are as low as 0.01 mm since the tool making the machining of the recesses of the drive- and or guide elements may have a precision of 0.001 degrees. A suitable tolerance may be about 0.5 mm, yet there are embodiments where the performance may benefit from being 0.5-0.1 mm, and even lower than 0.1 mm. There are several applications where the importance of a detailed positioning cannot be overrated, such as during application of a print onto the packaging container, application of a label onto the packaging container, arrangement of an opening device onto a packaging container, folding portions of the packaging container. Even if not required in any packaging machine presently, the increased precision provided by the present disclosure may be used to incorporate further operations in a packaging machine, operations that are enabled by the extreme precision.

To even further improve the positioning the drive elements and guide elements may comprise a recess for positioning of the endless conveyor or the two or more endless conveyors. In this way a vertical positioning of the base elements may be controlled to a high degree as well. Using two endless conveyors arranged in parallel, one on top of the other, will provide an even more improved stability in a length direction of the endless conveyors, due to the multiple attachment points of the base element. This will be visualized in the detailed description.

In one or more embodiments it is preferred that the drive element is a drive wheel, and in other embodiments the guide elements may comprise guide wheels too.

In order to reduce the number of components or functional elements it is preferred that recesses of the guide wheels and drive wheel are used to position the base element and thereby any packaging container associated therewith in relation to a processing step such as filling (align with filling nozzle), handovers (aligning with another conveyor or handover unit), etc.

In one or several embodiments it is preferred that the base element has a two part construction, which two parts may clamp onto the endless conveyor by tightening of attachment means, such as screws, bolts, eccentric levers etc.

In many preferred embodiments there are two endless conveyors onto which the base elements are arranged, thus providing an increased stability.

Furthermore, it may in one or more embodiments be preferred that the base element comprises gripper means, or a coupling means for the arrangement of gripper means, such that gripper means may be used to grip the packaging containers during transport thereof.

Such gripper means may in one or several embodiments be provided with guide means, such as pins, flanges etc arranged to cooperate with corresponding guide means of an exterior frame such that increase stability is obtained along the entire or part of the path. Such "corresponding guide" means may consist of cam tracks, grooves, ledges, etc. or a combination thereof.

Furthermore, the gripper means may be hingedly attached to the base element for allowing the gripper means to pivot in at least one direction, e.g. in a plane perpendicular to a transportation direction. In other embodiments the gripper means may be allowed to pivot more freely.

While the guide wheels may provided as separate units it is preferred that the drive wheel forms part of a filler carousel, in that it apart from providing the drive to the transportation system also servers the purpose of aligning the base elements, and any associated gripper means and packaging container in relation to a filling nozzle. The concept of dual-purpose or triple-purpose elements is appealing from a simplicity viewpoint, and since the filling carousel generally would be the component of the filling machine having the largest number of recesses the transferred driving force would be distributed over the largest possible length of the transportation system.

According to another aspect of the present invention it may also relate to a method of arranging base elements on an endless conveyor, according to claim 16. The method comprises the steps of:
Arranging an endless conveyor along a path over at least a drive wheel, the drive wheel having fixed recesses for receiving the base elements during operation,
arranging base elements along the endless conveyor in the positions of the fixed recesses,
forwarding the drive wheel so that unoccupied fixed recesses appear,
arranging base elements in the positions of the fixed recesses,
repeating the above until base elements are arranged along the entire length of the endless conveyor.

The tolerances during filling are extremely small, and during handovers the tolerances may be even smaller. The inventive method according to the present aspect of the invention cancels out several manufacturing tolerances by calibrating the arrangement directly in relation to the machine in which the transportation system is to be used. Reconnecting to the description of embodiments of the inventive device it should be apparent from the above description that a single base element having a fixed position will not introduce a practical limitation, however that particular base element should be the first one to be arranged in a recess.

In one or more embodiments the endless conveyor leaves the filling wheel in a tangential direction in relation to a circumference of the filling wheel.

By allowing for the endless conveyor to leave the filling wheel in a tangential direction any packaging containers being carried by the base elements will experience a transition from a state where there is a centripetal acceleration (before leaving the filling wheel) to a state with no acceleration forces (when having left the filling wheel). This will minimize product splashing out of the filled packaging container. This is a significant advantage as compared to existing systems where in some cases packaging containers leaves the filling wheel by being transferred to the carriers of another star wheel, thus experiencing a momentary switch from acceleration in one direction to acceleration in an essentially opposite direction. That approach results in splashing for packages being filled through the neck, and is expected to do even more so for packages being filled through an open bottom end since that opening is generally much larger.

In theory it would, by using the system of the present invention, be possible to allow for the packaging container (the endless conveyor) to leave the filling wheel along a curve shaped to "catch" the displaced fluid inside the packaging container to reduce splashing even further. Though being a possibility such a solution would be dependent on the speed of the endless conveyor, the product being filled and what not, and as such it is to be regarded as an unnecessarily complicated solution.

After having left the filling wheel in a tangential direction it is preferred that the endless conveyor travels along a rectilinear path until reaching a sealing unit in which the packaging containers are sealed. After the sealing step the risk of splashing is eliminated.

In one or more embodiments the base elements may comprise a coupling portion, such that they may receive a gripper means in a releasable coupling. The presence of a coupling portion enables a versatile use of various gripper means, e.g. to accommodate transport of packaging containers of various sizes, packaging containers gripped in a sleeve portion or in a neck portion (such as below a neck ring) etc. In relation to previous embodiments for which it is preferred that the base elements allow for left turns as well as right turns it may be preferred to locate the coupling portion near an upper or a lower end of the base element such that engagement between the base element and a drive wheel or a guide wheel is not hampered.

In one or more embodiments the coupling portion enables a hinged coupling between the base element and gripper means. A more specific example would be that a gripper element comprises a base element being attachable to the endless conveyor, and a gripper segment being hingedly attached to the base element, wherein the gripper segment comprises the gripper means used to grip the packaging container.

By using this arrangement it is possible to introduce a degree of freedom for the gripper means. A direct effect of this may be that it is possible to lean the gripper means and thereby an associated packaging container during various processing steps. For example, it may be possible to lean the packaging container radially inwards during filling to adjust for a centripetal effect. It will then be possible to fill the packaging container as if it was filled in a stationary filler (with a slightly increased gravitation), resulting in less splashing and foaming. In related embodiments it is preferred that the pivoting motion is limited to a plane orthogonal to the transportation direction. This will be discussed in further detail in the detailed description of embodiments.

Though there are several advantages with having a two part gripper (comprising a base element and a gripper means) the present invention does not exclude the use of a single element serving both purposes of attaching to the endless conveyor and gripping packaging containers. To conform to the terminology used thus far, in such embodiments the base element may be said to provide both purposes, i.e. such a combined element will have any characteristic of a base element as described in the present application, and adding to this it will have the ability to grip a packaging container. It is to be understood that the base element and the gripper element are functional elements, and each of them may comprise a number of components necessary in order for them to perform their function. One example

For the purposes of this embodiment guide means, e.g. guide pins, of the gripper element may cooperate with one or more cam curves so as to guide the inclination during filling. In one or more associated embodiments the cam curves may be shifted in a vertical position (in a reference system where the filling wheel rotates in a horizontal plane). This may be used to readily vary the inclination during filling so as to accommodate the inclination to a rotational speed of the filling wheel. E.g. the radially outer cam curve could be shifted upwards in relation to the radially inner cam curve, resulting in an inclination radially inwards (i.e. a banked turn). During filling this may be particularly desirable, yet the functionality may be used in other turns too, so as to cancel out or minimize acceleration in lateral directions e.g. for a filled packaging container.

In one or more embodiments the transportation system picks up the packaging containers after a sterilization device, in the sense that packaging containers are arranged in the transportation system after having being handled in a sterilization device. The transportation system then remains in contact with the packaging containers until the packaging containers are securely sealed, after which the packaging containers may be forwarded for further processing and the transportation system is guided back to the beginning (being an endless construction).

In other embodiments the transportation system may include a segment prior to the sterilization device as well, such that the transportation system delivers the packaging containers at one end of the sterilization device and picks them up again at another end of the sterilization device.

In one or more embodiments the transportation system is arranged to transport packaging containers from a sterilization device, through a filling device and a sealing device before handing the packaging devices over to further processing.

In one or several embodiments it is preferred that the transportation system is adapted to follow curvatures to the left and to the right, i.e. adapted to follow a guide wheel in a left turn and a right turn. Features making this possible is that the endless conveyor is flexible, and that the gripper element, and in particular the base element thereof, is symmetrical in its appearance and behaviour during left turns as well as right turns. This is not crucial, since the guide wheels may be designed differently depending on if they are to provide a left turn or a right turn, and also there are embodiments with e.g. only two wheels resulting in turns in only one direction, However, if not prevented by other requirements there are advantages with having a uniform design. One embodiment will be exemplified in the detailed description.

In one or more embodiments the endless conveyor comprises a length of flexible line the ends of which is connected to each other by means of a coupling element. It is preferred that the coupling element allows for an adjustable coupling, such that an effective length of the endless conveyor is adjustable to compensate for changes in the effective length due to e.g. changes in tension or wear, as well as allowing for fine tuning of tension in the endless conveyor.

In one or more embodiments the endless conveyor comprises a flexible metal wire in a plastic casing. In one example the flexible metal wire is a stainless steel, multi-thread wire having a 2-mm diameter and the casing is a polyester elastomer having a hardness of 55° Shore D and a diameter of 9.5 mm and in other embodiments it may be a Polyurethane elastomer. All materials should be FDA approved (or corresponding approval) where required. This type of transportation will provide an endless conveyor with adequate strength still having an exterior well suited for applications within the food industry. The particular type of endless conveyor has several beneficial features, yet there are numerous others that could be used as well, depending on the type of application.

Although various aspects of the invention are set out in the accompanying independent claims, other aspects of the invention may include any combination of features from the described embodiments and/or the accompanying dependent claims with the features of the independent claims, and not only the combinations explicitly set out in the accompanying claims.

### Brief Description of the Drawings

Fig. 1 is a schematic plan view of a first embodiment of the present invention.
Fig. 2 is a detailed perspective view of a second embodiment of the present invention.
Fig. 3 is an exploded view of a connector arrangement involving a connector element.
Figs. 4A and B schematically illustrates packaging containers carried by the transportation system according to a variation which may be used in any embodiment of the present invention.

### Detailed Description of Embodiments

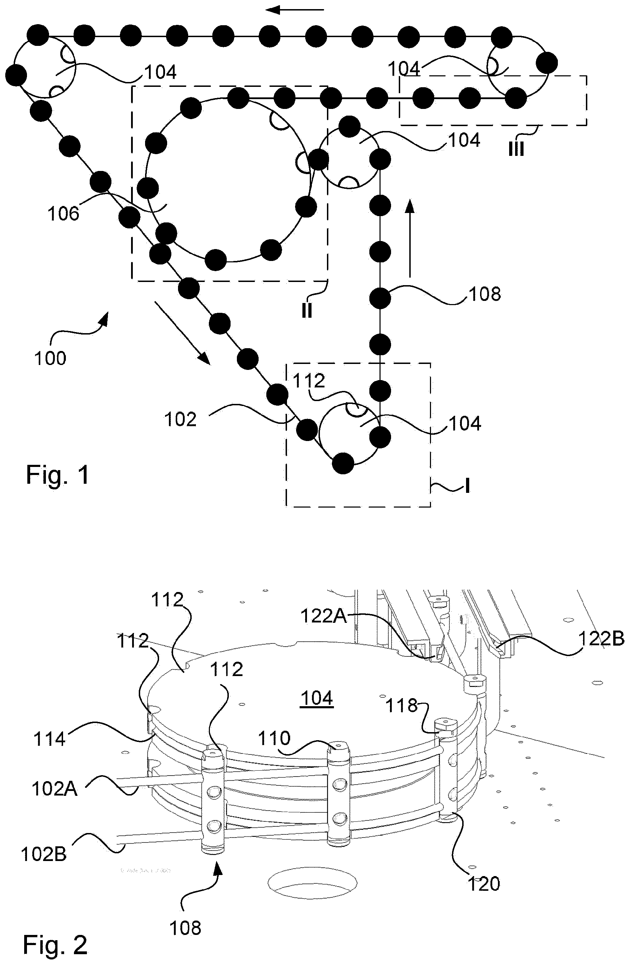

The schematic plan view of Fig. 1 illustrates a basic layout of a transportation system 100 according to a first embodiment of the present invention, as arranged in a filling machine. There is a pick-up position **I** where packaging containers are introduced to the transportation system 100, and from there to packaging containers are transported to a filling location **II** in the present embodiment a filling carousel. In area **II** the drive wheel acting as a drive element is shown, yet as will be discussed later, one filling station of the filling carousel is arranged for and aligned with each recess. After leaving the filling carousel in a tangential direction relative to the circumference of the drive wheel (and thus the filling carousel) the packaging containers are transported to a sealing location **III** after which they are handed over to subsequent handling.

For these purposes an endless conveyor 102 extends along a closed path, guided by guide elements in the form of guide wheels 104 and drive elements in the form of drive wheels 106 (in the present embodiment only one drive wheel is used, and it will guide the transportation system as well as driving/propelling it). Base elements 108 are distributed along the circumference of the endless conveyor 102, and the base element 108 may in turn have attachment positions/coupling arrangements 110 (Fig. 2) for attachment of auxiliary equipment.

The drive wheel(s) 106 as well as the guide wheels 104 are provided with recesses (fixed recesses) 112 fitting matingly with the base elements 108, as well as one or more circumferential groove (not shown in Fig. 1) accommodating the endless conveyor 102. Typical processing steps for packaging containers being located by the base elements 108 may be that they are sterilized, that they are filled, and that they are sealed, just to mention a few. The present construction, with the base elements 108 fitting matingly in the recesses 112 enable delicate positioning of the base elements 108 and therefore of any packaging device directly or indirectly supported by the base elements 108, which is a particular advantage during the processing steps mentioned above. One example to further elucidate this is that the drive wheel 106 may preferably be rigidly connected to the filling carousel, concentrically therewith. This will result in that the position of the base elements in relation to a filling station during filling is perfect at all times. Since the recesses 112 already are used/desired for positioning purposes they may also be used for propelling purposes. The entire transportation system 100 may be driven by a drive wheel 106 acting on the base elements 108, the same wheel 106 that already serves the purpose of positioning the base elements 108, e.g. during filling. In this way there is no necessity for additional drive means. The drive wheel 106 may be driven by any suitable motor depending on load and speed, and be directly connected to a drive or connected via a set of gears, a belt or other similar means. The drive wheel 106 will transfer a propelling force to the transportation system 100 via the base elements 108, acting as gears, i.e. each individual base element will act as a single gear when it engages with a recess of a drive wheel or corresponding arrangement. In order to minimize concentration of loads it may be preferred to include the drive on the wheel having the largest diameter, which for the illustrated filling system is the wheel 106 associated with a filling carousel. The layout of the filling carousel is not disclosed in detail in Fig. 1 yet there several examples of filling carousels available in prior art and since the present invention does not relate to details of filling systems etc, any such detailed information are considered superfluous.

The distance between adjacent base elements 108 (centre-to-centre or "CC") is referred to as the pitch. It is noticeable that the pitch has to be constant around the length of the endless conveyor 102, and it is also noticeable that the length of the endless conveyor 102 has to be an integer number times the pitch, if not, it would not be possible for the base elements 108 to be arranged with a constant CC distance, and the base elements 108 would not match with the recesses 112.

The use of recesses 112 has in itself several advantages. For example the timing and calibration of the system is very straightforward. Any processing performed (such as sterilization, heating, filling, folding, handovers etc) may be calibrated in relation to the recesses, even if packages of course may be included at some stage during fine tuning. Once the calibration is performed the operation will run smoothly as long as the base elements 108 are positioned by means of the recesses 112. This works the other way too, starting with an endless conveyor 102 without any base elements 108 there is no need for a delicate calibration procedure and additional timing belts, since the system itself will provide for this in the following way: When first attaching the base elements 108 to the endless conveyor 102 the drive wheel 106 (having the largest amount of recesses) or any other guide wheel 104 may be used as a template. This is more readily understood from observing the slightly more detailed view of Fig. 2. The endless conveyor 102 may be arranged in its path in the machine, and there may be a circumferential groove 114 in the drive wheel 106 for positioning it. Thereafter the base elements 108 are arranged one by one and are positioned by the recesses 112 and tightened to the endless conveyor 102 as they are positioned by a recess. In this way the firstly arranged base element 108 will determine the position of all the rest and by gradually forwarding the endless conveyor 102 in the wheel 104/106 the process may be repeated until the entire conveyor 102 is occupied by base elements 108. A practical way of performing this operation is to first arrange some base elements 108 slidably on the endless conveyer and then gradually forwarding the endless conveyor and arrange and tighten the base-elements 108 as they are arranged in the recesses of the wheel 104/106. It is readily appreciated that the effective length of the endless conveyor is crucial, and thus the positioning of guide elements (wheel(s)) and drive elements (wheel(s)) is delicate as well. However, these parameters are readily calculated and once that is settled the otherwise delicate and critical calibration is more or less automatically achieved.

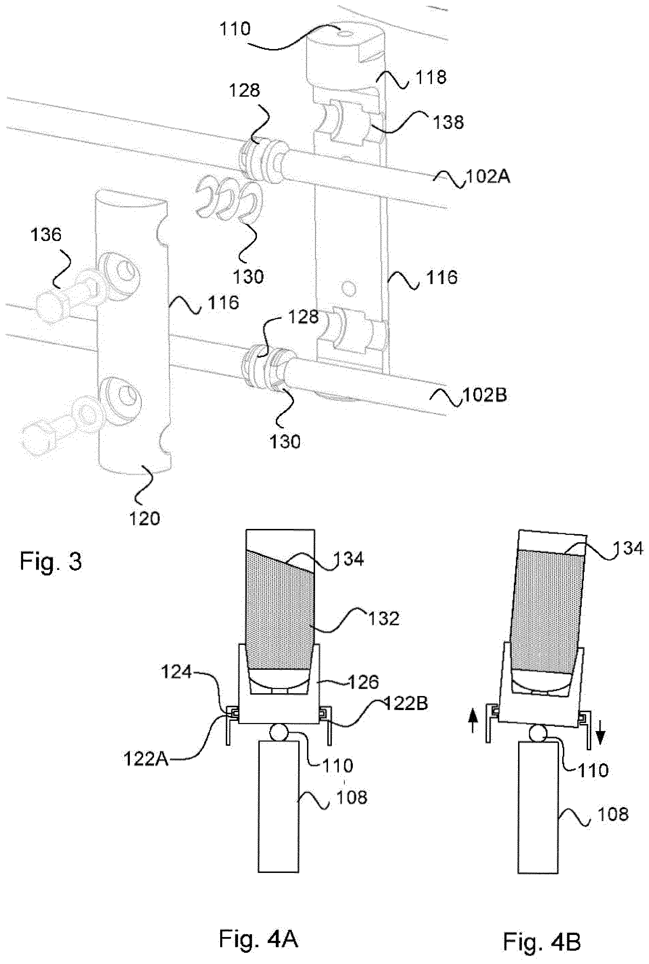

In a specific embodiment the process in the following: the raw material for the endless conveyor is cut into the correct length, and in the ends the rubber or plastic sheath is removed such that the inner wire or cord is exposed. T-connectors 128 (see Fig. 3) are thread onto the wire and welded in place. The T-connectors 128 are arranged in a base element 108 having a particular design such that it may receive the T-connectors, this base element may be referred to as a connector element 116 as showed in Fig. 3 and if the length of the endless conveyor needs to be adjusted, C-shims 130 (C-shaped shims) are interposed in the most obvious manner. The connector element 116 is then assembled, and thus an endless conveyor is formed, which conveyor is arranged in the path in the packaging machine and completed with the remaining base elements 108. During repairs or maintenance, or for any other reason, it may be preferable to arrange the endless conveyor in its path before the free ends of the conveyer are joined.

The length of the endless conveyor 102 is readily calculated, and it could in practice be manufactured as a closed loop, yet due to practical reasons it is preferred that it comprises a connector element 116. By having a connector element 116 connecting the free ends of a conveyor thus forming an endless conveyor 102 it is also possible to include a tensioning function, such that the effective length of the endless conveyor 102 may be finely tuned, e.g. in the already described manner. By changing the effective length of the endless conveyor 102 the tension in it may be changed, and by balancing the length a predetermined pressure may be achieved. In practice the length of the endless conveyor, or rather, the length of its path is not a variable parameter since this length is fixed by the pitch (to be described)

The resulting endless conveyor 102 with base elements 108 will constitute a timing belt of its own, in that synchronisation between the conveyor and the wheels, as well as between the wheels, will be predictable and constant. Simply put the present solution results in zero drift between moving components coupled to the same drive. If for some reason it is not desired to utilize the drive wheel or the guide wheels as templates, there may be provided a separate template of linear (or curved) design to be used for installation purposes only. Such separate template should preferably have a number of recesses for positioning of base elements 108, the higher number the better.

Though Fig. 3 actually illustrates a connector element 116 it may be used for describing some beneficial features of any base element 108. Apart from the fact that the regular base element does not have to accommodate the T-connectors 108 it may have a very similar design. It may comprise two or more parts 118 and 120 which are removably attached to eachother (by means of screws 136 in the view of Fig. 3, yet other means may used instead). Through-holes 138 are arranged for accommodation of the endless conveyor 102. By arranging each through-hole 138 in such a way that they have a partition in longitudinal direction they will be accessible in such a way that the endless conveyor may be arranged therein without being thread into place, i.e. without the necessity of having a free end to pass through the through hole. In the illustrated embodiment each through-hole 138 is split along a longitudinal centre-plane (longitudinal referring to the length direction of the through-hole, i.e. corresponding to the longitudinal direction of the endless conveyor as it is arranged in the through-hole), leaving semi-cylindrical grooves in the each of the parts 118, 120. When the base elements are attached to each other the grooves will be in an opposing relationship, defining the through-hole 138. The dimension of the through hole is such that when the two parts of the base element are assembled they will clamp the endless conveyor between them, thus attaching the base element 108 to the same.

Referring back to the arrangement of the endless conveyor in its path, one or more of the guide wheels 104 may be movably arranged. All guide wheels are obviously movably arranged in that they are free to rotate to fulfil their purpose, yet at least one may be arranged to allow for a shift in a lateral direction to facilitate assembly and disassembly of the transportation system, and this is what movable refers to in the present context. It should be emphasized that the position of the guide wheels 104 during operation is, however, a high-precision position since that position will determine the path length for the endless conveyer, which in turn is delicately set by the said pitch. Therefore, moving the movable guide wheel 104 involves no fine tuning. The movable guide wheel is shifted to a position enabling for the endless conveyor to be arranged along its path, and after that the movable guide wheel is moved back to a fixed position. This fixed position may be ensured by means of stop elements in any suitable way known to the skilled person given the task and well acquainted with similar tasks.

In practice, a desired length of the endless conveyer is determined by calculating the required path length. Given the desired tension in the endless conveyor during operation (such as 500 N) the associated elongation may be calculated from specification documents for the material used for the endless conveyor. Knowing this, and knowing the length occupied by the connector element 116 (where applicable) and related components a suitable length of endless conveyor is prepared and drawn around its path. For embodiment where the endless conveyor is not provided as a closed loop, its ends are joined at the connector element 116. After this the connector element is adjusted (e.g. using shims) until the correct tension is achieved. Since the endless conveyor follows the correct path its length will be perfectly tuned, and since the base elements 108 may be arranged and attached after the tuning of the endless conveyor their position will not be affected.

A possible design of the base element 108 is shown in Fig. 2. By providing a base element 108 in the overall shape of a solid cylinder formed from two pieces 118, 120 it may be readily clamped (bolted and held by friction) onto the endless conveyor 102. The design is more readily understood from the view of Fig. 4, although the interior of the connector element 116 may slightly different from the regular base element to fit the connectors 128, the overall construction is the same. The resulting base element 108 will be symmetrically arranged onto the endless conveyor 102 allowing full compatibility with guide wheels 104 guiding it to the left or to the right. In the present example the endless conveyor 102 comprises two elements 102A and 102B ensuring adequate stability for the base element 108 in a length (or longitudinal) direction of the endless conveyor102 since the two attachment points of the endless conveyor to the base element 108 will prevent it from tilting in said length direction. The present base element 108 has beneficial features in its circular cross section and non-complex design, though there are obviously other ways of designing such base elements.

Referring to the schematic view of Figs. 4A and 4B it is there shown coupling means, or a coupling arrangement 110 for attaching auxiliary equipment to the base elements 108 (this is also shown in Fig. 2). Such auxiliary devices most often include gripper elements for positioning of packaging containers, though other devices are not excluded. In the present embodiment the transportation system 100 grips packaging containers in a first end of a filling machine, and maintains the grip until the packaging containers are released in a second end of the filling machine. This continuous grip provides superior control of the filling process. The exact layout of the gripper elements are not essential for appreciation of the advantages of the present invention according to one or more embodiments thereof. The drawings as such illustrates packaging containers 132 in the process of being filled, i.e. while they are moving along a circular arc of a carousel filler, which explains the behaviour of a liquid level 134, to be explained in more detail once the basic components and their function have been described. In the present embodiment the coupling means 110 are illustrated by a circle, while in the embodiment of Fig. 2 it is provided by a threaded opening, to which auxiliary equipment such as a gripper element 126, may be screwed. The coupling means 110 may obviously be more or less complicated. Any gripper element 126 may comprise guide means 124, e.g. guide pins or guide flanges which may be used to secure a position or inclination of the gripper element 126. As mentioned earlier, the use of two or more endless conveyors may stabilize the base element 108 in a longitudinal direction as already mentioned, yet a tilt in a lateral direction should also be avoided, in particular when the base element 108 carries a filled packaging container having a significant weight. The packaging container is schematically indicated at reference numeral 132, with the liquid level of the filled product indicated by 134. For the purpose of lateral stability there is also a guide arrangement 122A, 122B, shown as a cam track in Fig. 2 and more schematically in Figs. 4A and 4B. The cam track 122A,B or a set of cam tracks may also be used to activate a function of the gripper element 124. Such a function is not part of the present invention but for the sake of completeness it may consist of two cam tracks running in parallel, each guiding a cam (or a pin) coupled to a function of the gripper element 124. By diverging or converging the cam tracks a relative motion may be effected, in turn resulting in an operation. For example, an action may be to open and close the gripper element to release or grip a packaging container. It is preferred, or it at least has associated advantages, that the coupling means 110 are arranged at one of the ends (the top or bottom end in the embodiment shown in Fig. 2) of the base element 108. This position enables for the auxiliary equipment to be located above or below the base element 108, and at least outside of the portion of the base element engaging the guide means or drive means during operation of the transportation system, such that it is not in the way. Further, it is also preferred that the auxiliary equipment is located on the same side of the base element as the coupling means, such that neither the auxiliary equipment nor any part of the coupling interferes with the engagement between the base element 108 and any guiding means (e.g, the recesses 112 or the cam tracks 122A,B) during left turns or right turns. In practice, it is foreseeable to have a system where only left turns, or only right turns, are used, and therefore this preference is tied to the present embodiments rather than being an absolute necessity.

A particular use of the guide system (e.g. the guide pins and the cam tracks) may be used in relation to the filling step. In the system illustrated in Fig. 1 and Fig. 2 filling is performed in a filling carousel in the area marked with **II**, where filling nozzles (not shown) are arranged in several positions around a circumference of the filling carousel. The general technique is commonly used in e.g. bottle filling and details will not be disclosed in any further detail. In the specific embodiment each filling nozzle will be aligned with a recess 112, in the sense that when a packaging container is gripped and transported through the filling carousel its opening will be aligned in a proper way in relation to the filling nozzle such that adequate filling may be performed.

For a carousel filler centripetal forces may be an issue in that the product to be filled will at some point be unconstraint (i.e. not bound by a centripetal force) as it leaves the nozzle, and in the unconstraint state it will follow the direction of the tangent as would any physical body leaving a constraint rotational motion. Depending on the rotational speed, distance to the packaging container etc. the point of impact relative to the packaging container may vary. The nozzle may be perfectly aligned with the packaging container for symmetrical filling with minimized generation of splash and foam when the filling carousel does not rotate or rotates at a first speed. However, as the rotational speed is altered (starts to rotate or rotates at a second speed different from the first speed) the filling pattern may be distorted, resulting in increased splashing and foaming. This may also depend on the product to be filled, in that the settings for a first product may not be optimal for a second product. The present transportation system enables for this problem to be solved with relative ease. By using the guide system (122A,B) (pins and cam track, or other cam/cam follower system) it is possible to adjust the inclination of the gripper element 124 as illustrated in Fig. 4B. If there is one cam track on either side of the endless conveyer as it follows the filling carousel (e.g. one cam track on a radial inside and one cam track on the radial outside) these cam tracks may be arranged on different heights in a direction perpendicular to the plane of travel of the endless conveyor 102, and the gripper element may be coupled with a hinged coupling 110 to the base element 108, resulting in that the gripper element will assume an inclined position relative to the horizon. The height of the cam tracks 122A,B may even be variable. The variation may be performed by a hydraulic system, a guide/servomotor system or any other suitable way obvious for a skilled person given the task. The inclination of a packaging container carried by the gripper element may thus be adjusted to account for the centripetal forces, such that in the reference system of the packaging container the product to be filled falls essentially straight down into the container (or in any other way suitable for the achievement of a particular filling pattern). In the view of Fig. 4B this is illustrated by the symmetric liquid level 134.

Continuing with the filling process, and also referring to the inertia of the product filled into the packaging containers, it may be preferred to avoid or at least minimize positive or negative accelerations (retardations) in order to minimize splashing. To accomplish this, it may in one or more embodiments such as the one illustrated in Fig. 1 be preferred that the packaging containers leaves the filling carousel in a tangential direction in relation to the circle they are following during filling, since this is the direction that the filled product would like to follow of left unconstraint. The advantage of such a path may increase with the size of the opening through which the packages have been filled. Inclination of the packaging containers to compensate for centripetal forces are not necessary for all products and at all speeds, yet in an embodiment where the packaging containers have been inclined to account for e.g. centripetal forces the cam tracks may be arranged to gradually and smoothly decrease the inclination as the packaging containers 134 leave the filling carousel.

In Fig. 1 it is evident that at each given time there are a certain number of unoccupied filling stations, using the term fillings station to define a position in which a packaging container may be filled (a recess 112 and corresponding nozzle etc.). There will be a certain number of "dead" filling stations, since some room is required to allow for the transport system to enter and exit the filling carousel (see area **II** in Fig. 1). From an efficiency standpoint it is preferable to minimize the number of unoccupied filling stations to maximize the use of the device. Allowing for the transportation system, the endless conveyor 102 and associated base elements 108 to leave the filling carousel at a sharper angle or following a curve could reduce the number of unoccupied filling stations, and even if that may be preferred for some embodiments the use of a tangential exit as shown in Fig. 1 area **II** enables higher rotational speed of the filling carousel, which in turn is beneficial for the efficiency of the filling machine as a whole. In the present embodiments a tangential exit has been preferred.

Once having left the filling carousel in a tangential direction the transport system, and thus any packaging containers arranged therein, follows a rectilinear path to a sealing station (area **III** in Fig. 1) where the packaging containers are sealed. For bottles of various types sealing may comprise the arrangement of a cap (capping) or a cork in the open end, and for paper based packaging containers it may comprise arranging a transversal seal of the open end of the packaging containers. After being sealed the packaging containers may be removed from the transportation system, and the transportation system may follow its path back to the pick-up position for receiving new packaging containers. In the general approach the packaging containers are handed over to a consecutive transportation system for further handling, such as folding (in the case of packaging containers formed from packaging laminate), packaging into secondary packages (e.g. cartons or crates) etc. The consecutive transportation system may be of the same kind as the inventive one, or of any embodiments thereof, and the reason for performing a handover may be that the level of hygiene may be higher inside a filling machine than what is needed after the packaging containers have been sealed, and it may therefore be preferred to isolate the filling machine to the highest possible extent.

During this handover, as well as the handover during pickup the gripper means may be controlled by cams or servomotors to perform a releasing or a gripping motion, depending on the situation. The inventive system allows for the handovers to be mechanically timed, resulting in a continuous and predictable performance with high reliability.

While the invention has been described with reference to one or more preferred embodiments, which embodiments have been set forth in considerable detail for the purposes of making a complete disclosure of the invention, such embodiments are merely exemplary and are not intended to be limiting or represent an exhaustive enumeration of all aspects of the invention. The scope of the invention, therefore, shall be defined solely by the following claims.

## Claims

1. A transportation system (100) for transporting packaging containers through a series of processing steps, comprising at least one endless conveyor (102) following a path including guide elements (104) and at least one drive element (106), base elements (108) distributed along the length of the endless conveyor, wherein in an operational position the base elements are rigidly attached to the endless conveyor, and
wherein the at least one drive element comprises recesses for receiving the base elements;
**characterized in that** the base elements are releasably arranged in positions that are continuously adjustable along the length of the conveyor.

2. The transportation system of claim 1, wherein the position of the base elements is matched with the position of the recesses as the base elements are arranged on the endless conveyor.

3. The transportation system of any preceding claim, wherein each base element is arranged symmetrically on the endless conveyor so that a centreline of the base element intersects with a centreline of the endless conveyor.

4. The transportation system of any preceding claim, wherein the endless conveyor comprises two endless wires arranged at a distance from each other in a vertical plane.

5. The transportation system of any preceding claim, wherein the drive element comprises a recess for receiving the endless conveyor.

6. The transportation system of claim 1 or 2, wherein a propelling force is transferred to the endless conveyor from the drive elements via the base elements.

7. The transportation system of any preceding claim, wherein the base element comprises a gripper means for gripping packaging containers.

8. The transportation system of any preceding claim, wherein the base elements comprises a coupling portion for coupling of a separate gripper means to the base element.

9. The transportation system of claim 4 or 5, wherein the base element or the gripper means comprises guide means arranged to cooperate with an associated guide arrangement along at least a portion of the path of the endless conveyor.

10. The transportation system of claim 9, wherein the guide means comprises guide pins arranged to follow guide arrangements in the form of cam tracks.

11. The transportation system, of claim 9 or 10, wherein the guide arrangement is arranged to incline the gripper portion during a step of filling.

12. The transportation system of any preceding claim, wherein the processing steps includes sterilization, filling and sealing.

13. The transportation system of any preceding claim, wherein an effective path length (L) of the endless conveyor is an integer number (N) of the pitch (P) between adjacent base elements; L=NxP.

14. The transportation system of any preceding claim, wherein the pitch is constant over the full extension of the endless conveyor.

15. The transportation system of any preceding claim, wherein the pitch and an absolute position of each base element along the length of the endless conveyor has a tolerance of about +/-0.5 mm, preferably 0.1-0.5 mm.

16. A method for arranging the transportation system of any preceding claim, in a machine for processing packaging containers, comprising the steps of:
arranging at least one endless conveyor following a path through the machine, the path including a guide arrangement having recesses; the method being **characterized in that** it further comprises the steps of:
consecutively arranging base elements or at least a portion thereof in the recesses and
attaching the base elements to the endless conveyor using the guide arrangements for obtaining a correct pitch between adjacent base elements.

17. The method of claim 16, wherein the guide arrangement is provided by a guide wheel or a drive wheel and further comprising the step of forwarding the guide wheel or drive wheel to expose unoccupied recesses and arrange base elements therein for subsequent attachment to the endless conveyor.

18. The method of claim 16 or 17, further comprising the step of applying a tension in the endless conveyor prior to attaching the base elements.

19. The method of any preceding claim 16-18, further comprising the step of utilizing an engagement between the base elements and the recesses to transfer a drive force from the drive wheel to the transportation system.

20. The method of any preceding claim 16-19, further comprising the step of preparing the at least one endless conveyor by joining the ends of a length of conveyor by means of a connector element acting as base element.

21. The method of any preceding claim 16-20, further comprising the step of arranging gripper elements to the base elements.

22. The method of any preceding claim 16-21, comprising the step of arranging two endless conveyors, and wherein a tension in the endless conveyors prior to arranging the base elements thereto is the tension used in operation of the transportation system

## Patentansprüche

1. Transportsystem (100) zum Transportieren von Verpackungsbehältern durch eine Reihe von Verarbeitungsschritten, umfassend wenigstens einen Endlosförderer (102), der einem Pfad folgt, welcher Führungselemente (104) und wenigstens ein Antriebselement (106) aufweist, wobei Basiselemente (108) entlang der Länge des Endlosförderers verteilt sind, wobei in einer Betriebsstellung die Basiselemente starr am Endlosförderer angebracht sind, und
wobei das wenigstens eine Antriebselement Aussparungen zum Aufnehmen der Basiselemente umfasst;
**dadurch gekennzeichnet, dass** die Basiselemente an stufenlos verstellbaren Positionen entlang der Länge des Förderers lösbar angeordnet sind.

2. Transportsystem nach Anspruch 1, wobei die Position der Basiselemente mit der Position der Aussparungen in Übereinstimmung gebracht ist, wenn die Basiselemente am Endlosförderer angeordnet sind.

3. Transportsystem nach einem der vorhergehenden Ansprüche, wobei jedes Basiselement am Endlosförderer symmetrisch angeordnet ist, so dass eine Mittellinie des Basiselements eine Mittellinie des Endlosförderers kreuzt.

4. Transportsystem nach einem der vorhergehenden Ansprüche, wobei der Endlosförderer zwei Endlosdrähte umfasst, die abständig zueinander in einer vertikalen Ebene angeordnet sind.

5. Transportsystem nach einem der vorhergehenden Ansprüche, wobei das Antriebselement eine Aussparung zum Aufnehmen des Endlosförderers umfasst.

6. Transportsystem nach Anspruch 1 oder 2, wobei eine Antriebskraft von den Antriebselementen über die Basiselemente auf den Endlosförderer übertragen wird.

7. Transportsystem nach einem der vorhergehenden Ansprüche, wobei das Basiselement ein Greifermittel zum Greifen von Verpackungsbehältern umfasst.

8. Transportsystem nach einem der vorhergehenden Ansprüche, wobei das Basiselement einen Kopplungsabschnitt zum Ankoppeln eines separaten Greifermittels an das Basiselement umfasst.

9. Transportsystem nach Anspruch 4 oder 5, wobei das Basiselement oder das Greifermittel ein Führungsmittel umfasst, das so angeordnet ist, dass es entlang wenigstens eines Teilabschnitts des Pfades des Endlosförderers mit einer zugehörigen Führungsanordnung zusammenwirkt.

10. Transportsystem nach Anspruch 9, wobei das Führungsmittel Führungsstifte umfasst, die so angeordnet sind, dass sie Führungsanordnungen in Form von Nockenbahnen folgen.

11. Transportsystem nach Anspruch 9 oder 10, wobei die Führungsanordnung so angeordnet ist, dass sie den Greiferabschnitt während eines Füllschrittes neigt.

12. Transportsystem nach einem der vorhergehenden Ansprüche, wobei die Verarbeitungsschritte Sterilisieren, Füllen und Siegeln umfassen.

13. Transportsystem nach einem der vorhergehenden Ansprüche, wobei eine effektive Pfadlänge (L) des Endlosförderers ein Ganzzahliges (N) des Teilungsabstands (P) zwischen benachbarten Basiselementen beträgt; L=NxP.

14. Transportsystem nach einem der vorhergehenden Ansprüche, wobei der Teilungsabstand über die gesamte Ausdehnung des Endlosförderers konstant ist.

15. Transportsystem nach einem der vorhergehenden Ansprüche, wobei der Teilungsabstand und eine absolute Position jedes Basiselements entlang der Länge des Endlosförderers eine Toleranz von etwa ±0,5 mm, bevorzugt 0,1-0,5 mm, aufweisen.

16. Verfahren zum Anordnen des Transportsystems nach einem der vorhergehenden Ansprüche in einer Maschine zum Verarbeiten von Verpackungsbehältern, umfassend die Schritte:
Anordnen wenigstens eines Endlosförderers in einem Pfad durch die Maschine, wobei der Pfad eine Führungsanordnungen mit Aussparungen aufweist;
wobei das Verfahren **dadurch gekennzeichnet ist, dass** es weiterhin die Schritte aufweist:
Anordnen von Basiselementen oder wenigstens eines Teiles der Basiselemente nacheinander in den Aussparungen und
Anbringen der Basiselemente am Endlosförderer mit Hilfe der Führungsanordnungen zum Erzeugen eines korrekten Teilungsabstands zwischen benachbarten Basiselementen.

17. Verfahren nach Anspruch 16, wobei die Führungsanordnung durch ein Führungsrad oder ein Antriebsrad bereitgestellt wird und weiterhin den Schritt umfasst: Vorwärtsbewegen des Führungsrads oder Antriebsrads zum Freilegen unbelegter Aussparungen und Anordnen von Basiselementen in den Aussparungen zur anschließenden Anbringung am Endlosförderer.

18. Verfahren nach Anspruch 16 oder 17, ferner umfassend den Schritt: Anlegen einer Spannung an den Endlosförderer vor dem Anbringen der Basiselemente.

19. Verfahren nach einem der vorhergehenden Ansprüche 16 bis 18, ferner umfassend den Schritt: Nutzen eines Eingriffs zwischen den Basiselementen und den Aussparungen, um eine Antriebskraft vom Antriebsrad auf das Transportsystem zu übertragen.

20. Verfahren nach einem der vorhergehenden Ansprüche 16 bis 19, ferner umfassend den Schritt: Erstellen des wenigstens einen Endlosförderers durch Zusammenfügen der Enden einer Länge des Förderers mittels eines als Basiselement fungierenden Verbindungselements.

21. Verfahren nach einem der vorhergehenden Ansprüche 16 bis 20, ferner umfassend den Schritt: Anordnen von Greiferelementen an den Basiselementen.

22. Verfahren nach einem der vorhergehenden Ansprüche 16 bis 21, das den Schritt umfasst: Anordnen von zwei Endlosförderern, und wobei eine Spannung in den Endlosförderern vor dem Anordnen der Basiselemente die im Betrieb des Transportsystems verwendete Spannung ist.

## Revendications

1. Système de transport (100) pour transporter des récipients d'emballage à travers une série d'étapes de traitement, comprenant au moins un convoyeur sans fin (102) qui suit un chemin comprenant des éléments de guidage (104) et au moins un élément d'entraînement (106), des éléments de base (108) distribués le long de la longueur du convoyeur sans fin, dans lequel dans une position opérationnelle les éléments de base sont attachés de façon rigide au convoyeur sans fin, et dans lequel ledit au moins un élément d'entraînement comprend des évidements destinés à recevoir les éléments de base,
**caractérisé en ce que** les éléments de base sont agencés de façon amovible dans des positions qui sont continuellement réglables le long de la longueur du convoyeur.

2. Système de transport selon la revendication 1, dans lequel la position des éléments de base correspond à la position des évidements lorsque les éléments de base sont agencés sur le convoyeur sans fin.

3. Système de transport selon l'une quelconque des revendications précédentes, dans lequel chaque élément de base est agencé de façon symétrique sur le convoyeur sans fin de telle sorte qu'un axe médian de l'élément de base coupe un axe médian du convoyeur sans fin.

4. Système de transport selon l'une quelconque des revendications précédentes, dans lequel le convoyeur sans fin comprend deux fils sans fin agencés à une distance l'un de l'autre dans un plan vertical.

5. Système de transport selon l'une quelconque des revendications précédentes, dans lequel l'élément d'entraînement comprend un évidement destiné à recevoir le convoyeur sans fin.

6. Système de transport selon la revendication 1 ou 2, dans lequel une force de propulsion est transférée au convoyeur sans fin à partir des éléments d'entraînement par l'intermédiaire des éléments de base.

7. Système de transport selon l'une quelconque des revendications précédentes, dans lequel l'élément de base comprend des moyens de saisie pour saisir les récipients d'emballage.

8. Système de transport selon l'une quelconque des revendications précédentes, dans lequel les éléments de base comprennent une partie de couplage pour coupler un moyen de saisie séparé à l'élément de base.

9. Système de transport selon la revendication 4 ou 5, dans lequel l'élément de base ou les moyens de saisie comprend(-nnent) des moyens de guidage agencés de manière à coopérer avec un agencement de guidage associé le long d'au moins un partie du chemin du convoyeur sans fin.

10. Système de transport selon la revendication 9, dans lequel les moyens de guidage comprennent des broches de guidage agencées de manière à suivre des agencements de guidage arrangements qui se présentent sous la forme de rampes de guidage.

11. Système de transport, selon la revendication 9 ou 10, dans lequel l'agencement de guidage est arrangé de manière à incliner la partie de saisie pendant une étape de remplissage.

12. Système de transport selon l'une quelconque des revendications précédentes, dans lequel les étapes de traitement comprennent la stérilisation, le remplissage et le scellage.

13. Système de transport selon l'une quelconque des revendications précédentes, dans lequel une longueur de chemin effective (L) du convoyeur sans fin est un nombre entier (N) du pas (P) entre des éléments de base voisins; L = NxP.

14. Système de transport selon l'une quelconque des revendications précédentes, dans lequel le pas est constant sur la totalité de l'extension du convoyeur sans fin.

15. Système de transport selon l'une quelconque des revendications précédentes, dans lequel le pas et une position absolue de chaque élément de base le long de la longueur du convoyeur sans fin présentent une tolérance d'environ ± 0,5 mm, de préférence de 0,1 mm à 0,5 mm.

16. Procédé d'agencement du système de transport selon l'une quelconque des revendications précédentes, dans une machine pour traiter des récipients d'emballage, comprenant les étapes suivantes:
agencer au moins un convoyeur sans fin qui suit un chemin à travers la machine, le chemin comprenant un agencement de guidage comportant des évidements;
le procédé étant **caractérisé en ce qu'**il comprend en outre les étapes suivantes:
agencer de façon consécutive des éléments de base ou au moins une partie de ceux-ci dans les évidements; et
attacher les éléments de base au convoyeur sans fin en utilisant les agencements de guidage pour obtenir un pas correct entre des éléments de base voisins.

17. Procédé selon la revendication 16, dans lequel l'agencement de guidage est formé par une roue de guidage ou une roue d'entraînement, comprenant en outre l'étape d'avancement de la roue de guidage ou de la roue d'entraînement afin d'exposer des évidements inoccupés et d'agencer des éléments de base dans ceux-ci en vue d'une fixation subséquente au convoyeur sans fin.

18. Procédé selon la revendication 16 ou 17, comprenant en outre l'étape d'application d'une tension dans le convoyeur sans fin avant la fixation des éléments de base.

19. Procédé selon l'une quelconque des revendications précédentes 16 à 18, comprenant en outre l'étape d'utilisation d'un engagement entre les éléments de base et les évidements afin de transférer une force d'entraînement de la roue d'entraînement au système de transport.

20. Procédé selon l'une quelconque des revendications précédentes 16 à 19, comprenant en outre l'étape de préparation dudit au moins un convoyeur sans fin en joignant les extrémités d'une longueur de convoyeur au moyen d'un élément de connecteur qui agit en tant qu'élément de base.

21. Procédé selon l'une quelconque des revendications précédentes 16 à 20, comprenant en outre l'étape d'agencement d'éléments de saisie sur les éléments de base.

22. Procédé selon l'une quelconque des revendications précédentes 16 à 21, comprenant l'étape d'agencement de deux convoyeurs sans fin, et dans lequel une tension dans les convoyeurs sans fin avant l'agencement des éléments de base sur ceux-ci est la tension utilisée lors du fonctionnement du système de transport.
